**Europäisches Patentamt**

**European Patent Office**

**Office européen des brevets**

(19)

(11) Veröffentlichungsnummer: **0 029 512
B1**

(12) **EUROPÄISCHE PATENTSCHRIFT**

(45) Veröffentlichungstag der Patentschrift:
08.06.83

(51) Int. Cl.³: **G 02 B 7/26**

(21) Anmeldenummer: **80106563.2**

(22) Anmeldetag: **25.10.80**

(54) **Einrichtung zum lösbaren Ankuppeln von Lichtleitfasern.**

(30) Priorität: **21.11.79 DE 2946941**

(43) Veröffentlichungstag der Anmeldung:
**03.06.81 Patentblatt 81/22**

(45) Bekanntmachung des Hinweises auf die Patenterteilung:
**08.06.83 Patentblatt 83/23**

(84) Benannte Vertragsstaaten:
**AT DE FR GB NL SE**

(56) Entgegenhaltungen:
**WO-A-80/02328
US-A-4 101 198**

„Electronic Design", B. 27, Nr. 21, Oktober 1979, Rochelle Park, US, „Low-loss connectors use new materials, methods to advantage", S. 36, 38, 39.
„IBM Technical Disclosure Bulletin", B. 22, Nr. 2, Juli 1979, New York, US, R.T. Evans *et al.*: „Optical fiber alignment tool", S. 686-687.
„Laser Focus", B. 16, Nr. 4, April 1980, Newton, US, M.J. Carlsen: „An elastic-tube fiber splice", S. 58, 60, 62.

(73) Patentinhaber: **Felten & Guilleaume Fernmeldeanlagen GmbH, Thurn-und-Taxis-Strasse 10 Postfach 4943, D-8500 Nürnberg 10 (DE)**

(72) Erfinder: **Mannschke, Lothar, Dipl.-Ing., Rodelhang 8, D-8501 Eckental (DE)**

(74) Vertreter: **Peuckert, Hermann, Philips Patentverwaltung GmbH Postfach 10 02 29 Steindamm 94, D-2000 Hamburg 1 (DE)**

## Einrichtung zum lösbaren Ankuppeln von Lichtleitfasern

Die Erfindung betrifft eine Einrichtung zum lösbaren Ankuppeln der freien Stirnseite mindestens einer, insbesondere zur Nachrichtenübertragung verwendeten, Lichtleitfaser, mit einem in mindestens einem Befestigungsstück gelagerten Richtelement und mit mindestens einem elastischen Element zum Ausrichten der Lichtleitfaser beim Ankuppeln an ein Gegenstück in einer im Richtelement angeordneten V-förmigen Rinne. Mit derartigen Einrichtungen sollen Lichtleitfasern untereinander oder je eine Lichtleitfaser mit einer Lichtquelle oder mit einem Detektor als Gegenstücke verbunden werden, wobei die übertragenen Signale möglichst verlust- und verzerrungsfrei mit hoher Informationsdichte auf lange Strecken weitergegeben werden.

Bei der aus „Electronic Design 21", Oktober 11, 1979, S. 328, bekannten Einrichtung zum lösbaren Ankuppeln von Lichtwellenleitern wird ein unverdrehbar gelagertes Richtelement mit einer V-Rinne verwendet, in die beim Kuppeln die Lichtleitfasern mit elastischen Elementen gedrückt werden. Dabei werden die Lichtleitfasern im Koppelbereich seitlich verbogen. Solche Verbiegungen beanspruchen die Fasern im ohnehin kritischen Koppelbereich. Unter der Verbiegung leidet auch die von der V-Rinne bewirkte Ausrichtung der Fasern. Verbinder dieser Art (z.B. auch DE-A Nr. 2527541) benötigen Raum für die Verbiegung.

Der Erfindung liegt daher die Aufgabe zugrunde, eine Einrichtung zum lösbaren Ankuppeln der Lichtleitfaser auf möglichst kleinem Raum aus einfachen, störungsunanfälligen, leicht zu reinigenden und vielseitig einsetzbaren Teilen zu schaffen, die kostengünstig herstellbar ist.

Diese Aufgabe wird bei einer Einrichtung der eingangs genannten Art dadurch gelöst, dass das Richtelement mit der V-förmigen Rinne exzentrisch und unverdrehbar im Befestigungsstück angeordnet ist, dass in dem an die Rinnenseite des Richtelementes angrenzenden Bereich des Befestigungsstückes eine parallel zur V-förmigen Rinne ausgerichtete Mulde für die Vorjustierung der Lichtleitfaser ausgebildet ist, und dass im Bereich der Mulde in der Stirnseite des Befestigungsstükkes mindestens ein etwa bünding abschliessendes Druckstück aus gummielastischem Material im Befestigungsstück angordnet ist.

Lichtleitfasern mit sehr kleinem Durchmesser können mit solchen Einrichtungen mit hoher Güte angekoppelt werden.

Weitere, an die Vielfalt der Verwendungen angepasste und die kostengünstige Herstellung betreffende vorteilhafte Ausgestaltungen sind in den Unteransprüchen angegeben.

Die Erfindung mit ihren Ausgestaltungen wird anhand der in der Zeichnung schematisch dargestellten Ausführungsbeispiele näher erläutert. Es zeigen:

Fig. 1 einen Längsschnitt durch einen aus zwei Befestigungsstücken bestehenden Verbinder zum Kuppeln von zwei Lichtleitfasern miteinander,

Fig. 2 einen Querschnitt an der Übergabestelle des Verbinders aus Fig. 1, und

Fig. 3 in dreidimensionaler Explosionsdarstellung einen Geräteanschluss.

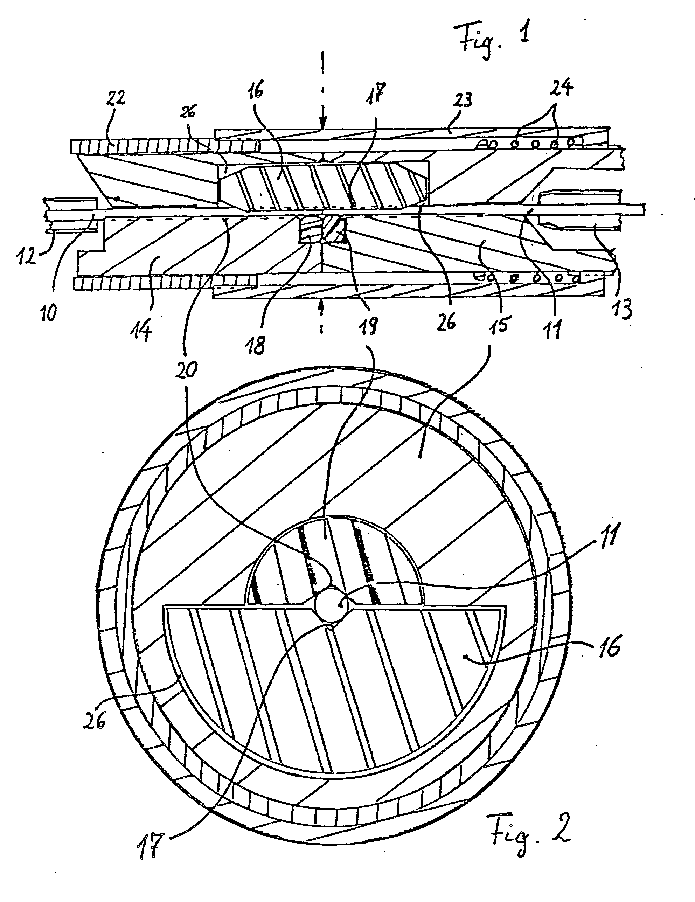

Die in Fig. 1 dargestellte Anordnung dient der Verbindung zweier, stirnseitig von ihren Hüllen 12, 13, auch *coating* genannt, befreiter Lichtleitfasern 10, 11. Das Übertragungssystem zum Transportieren von Fernsehprogrammen über solche Lichtleitfasern ist nicht dargestellt. Es ist jedoch wichtig zu wissen, dass über die Lichtleitfasern in kurzen Zeitintervallen eine sehr grosse Zahl von frequenz- und/oder impulsabhängig gesteuerten Signalen transportiert wird, deren Übertragungsgüte insbesondere von der Qualität mehrerer Übergabestellen abhängig ist.

Die Qualität einer Übergabestelle von Lichtleitfasern ist in erster Linie von der Ausrichtung ihrer Stirnseiten abhängig. In Befestigungsstücken 14, 15 der jeweiligen Lichtleitfasern 10, 11 sind daher gleichartige Aussparungen 26 eingeformt, in denen ein Richtelement 16 liegt. Die Aussparungen 26 liegen exzentrisch in bezug auf eine zentrale, durch die Lichtleitfasern gehende Achse, so dass das von ihnen aufgenommene Richtelement 16 unverdrehbar gehalten wird. Das Richtelement 16 hat auf der der zentralen Achse zugewandten Seite eine V-förmige Rinne 17, in der die Stirnseiten der Fasern 10, 11 wie in einer optischen Bank aufeinander ausrichtbar sind. Zur Erleichterung des Einführens der Lichtleitfasern 10, 11 dienen trichterartige Erweiterungen an den Eingangsstellen der V-förmigen Rinne 17.

Die in Fig. 1 gestrichelt dargestellte V-förmige Rinne 17 ist in der vergrösserten Ansicht der Fig. 2 noch besser erkennbar, deren entsprechende Einzelteile die gleichen Bezugszeichen tragen und gleichzeitig mit erläutert werden.

Zur Ausrichtung der Lichtleitfasern 10, 11 ist beim Zusammenfügen eines Befestigungsstückes 14 mit seinem Gegenstück 15 ein in Richtung auf die V-förmige Rinne 17 wirkender Druck erforderlich. Dieser seitliche Druck wird von gummielastischen Druckstücken 18, 19 erzeugt, die in den Stirnseiten der Befestigungsstücke 14, 15 angebracht sind. Die Druckstücke liegen dabei am Rande der Aussparung 26.

Die in Grössenordnung der Lichtleiterhüllen 12, 13 dimensionierten gummielastischen Druckstücke 18, 19 ragen an der Stirnseite der Befestigungselemente 14, 15 mit Übermass heraus, um beim Zusammenfügen in Richtung auf die Lichtleitfasern 10, 11 und das Richtelement 16 auszuweichen. Gummielastische Druckstücke haben gegenüber schwierig zu montierenden Federelementen noch den besonderen Vorzug, einen über eine Fläche verteilten Druck gleichmässig weitergeben zu können. Von ihnen werden daher die Lichtleitfasern 10, 11 besonders geschont, wodurch die Lebensdauer derartig empfindlicher Leitungen verlängert wird.

Den Fig. 1 und 2 ist ferner zu entnehmen, dass gegenüber der V-förmigen Rinne 17 des Richtelementes 16 in den Befestigungsstücken 14, 15 eine Mulde 20 eingelassen ist. Diese Mulde 20 liegt in achsialer Richtung parallel zur Rinne 17 des Richtelementes 16. Sie dient zunächst dazu, eine Lichtleitfaser im Befestigungsstück in bezug auf die spätere Lage vorzujustieren. Mit der Mulde 20 wird darüber hinaus auch noch die Ausrichtung der Fasern in der V-förmigen Rinne 17 weiter verbessert, insbesondere dann, wenn sie sich geradlinig nicht nur über die Befestigungsstücke, sondern auch über die Druckstücke fortsetzt. Im montierten Zustand befinden sich die Lichtleitfasern 10, 11 also in zwei gegenüberliegenden, sich ergänzenden rinnenförmigen Ausnehmungen, der V-förmigen Rinne 17 der Mulde 20. Dabei sorgt die Mulde 20 im Bereich der Druckstücke 18, 19 für die besonders hohe Güte der Übergabestelle.

Den Fig. 1 und 2 kann man ferner entnehmen, wie die Befestigungsstücke miteinander verbunden werden. Dazu trägt das Befestigungsstück 14 ein Überwurfrohr 22 mit Aussengewinde, in das das Innengewinde eines Überwurfrohres 23 des Befestigungsstückes 15 eingreift. Um beim Zusammenschrauben einen gleichmässigen Befestigungsdruck zu erzielen, stützt sich das Überwurfrohr 23 über eine Schraubenfeder 24 am Befestigungsstück 15 ab.

Selbstverständlich ist es möglich, Befestigungsstücke in anderer Montageart, beispielsweise durch Presspassung, Rastmittel oder Bajonettverbindung zusammenzufügen, ohne dass dies im einzelnen dargestellt werden muss, da solche Verbindungsmöglichkeiten hinreichend bekannt sind. Die Zeichnung ist ferner an der für die Erfindung nicht mehr wesentlichen, der Stirnseite abgewandten Seite abgebrochen, weil davon die Ausrichtung der Lichtfasern nicht mehr betroffen wird. An dieser Stelle wären dann weitere Ausgestaltungen, wie beispielsweise ein Schrumpfschlauch, zu ergänzen.

Die in den Zeichnungen dargestellte Anordnung kann kostengünstig im Spritzgussverfahren hergestellt werden, wozu ein aushärtbarer unelastisćr Kunststoff für die Befestigungsstücke 14, 15 verwendet werden kann, in deren die gummielastischen Druckstücke 18, 19 einklebbar oder in einem Arbeitsgang mit einspritzbar sind, wozu spritzfähiges, nach Aushärten gummielastisches Material verwendet wird.

Zur weiteren Verbesserung der Übertragungsqualität können die Stirnflächen der Lichtleitfasern 10, 11 nach Montage in den Befestigungsstücken 14, 15 einfach gewartet werden, weil ihre Stirnflächen bündig mit den Stnflächen der Befestigungsstücke abschliessen. Vor dem Einsetzen des Richtelementes 16 ist daher eine — von Maschinen unterstützbare — einfache Reinigung möglich.

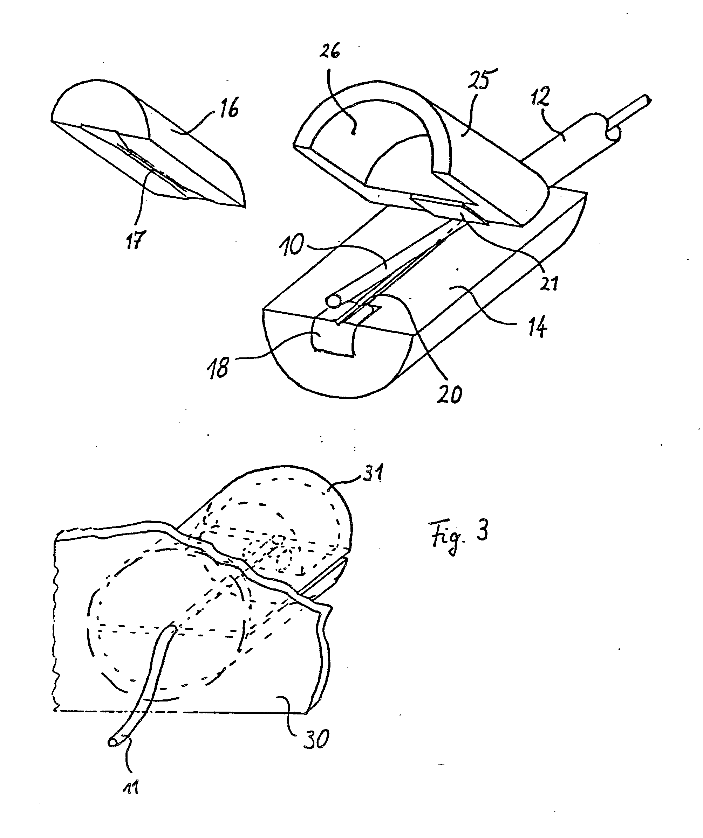

Im oberen Teil der in Fig. 3 dargestellten Anordnung eines Geräteanschlusses ist das Wesentliche einer Hälfte einer in den vorangehenden Fig. 1 und 2 mit den gleichen Bezugszeichen versehenen Verbinderanordnung dargestellt. Darüber hinaus kann in dieser Figur noch besser erkannt werden, wie die Lichtleitfaser 10 im Befestigungsstück 14 in axialer Richtung justiert wird. Im rückwärtigen Bereich einer Halbschale 25 des Befestigungsstückes 14 ist gegenüber der Mulde 20 und dem Lichtleiter 10 ein Klemmittel 21, beispielsweise eine gummielastische Platte, angebracht, von dem die Lichtleitfaser zwischen den Teilen des Befestigungsstückes gehalten wird. Bei der Auswahl des Materiales für das Klemmittel 21 ist insbesondere auf die Oberflächeneigenschaft zu achten, die dafür sorgen soll, dass die Lichtleitfaser 10 nach Montage im Befestigungsstück 14 nicht mehr axial verrutscht und nicht beschädigt wird. Zur Zugentlastung wird die Hülle 12 in nicht dargestellter Art gesondert mit eingeklemmt. Eingeklemmt soll die Lichtleitfaser 10 nicht nur dem Montagedruck von der gegenüberliegenden Stirnseite der anderen Lichtleitfaser, sondern auch dem Druck des Reinigungsvorganges standhalten.

Mit gestrichelten Linien ist in Fig. 3 dargestellt, dass das Befestigungsstück 31 ebenfalls eine Aussparung 26 hat, in die das bereits beschriebene Richtelement 16 passt. Das Befestigungsstück 31 unterscheidet sich von dem vorher beschriebenen nur dadurch, dass entlang der mit langen Strichen gezogenen Linie eine Befestigung an einer Gerätewand 30 vorgesehen ist. Da die Art und Weise dieser Befestigung nicht zur Erfindung beiträgt und in bekannter Technik ausführbar ist, kann eine Erläuterung an dieser Stelle entfallen. Anstelle der Lichtleitfasser 11 sind im Geräteanschluss selbstverständlich auch optoelektronische Wandler, z.B. modulierbare Lichtquellen oder Detektoren, montierbar.

Fig. 3 ist ferner zu entnehmen, wie vielseitig die beschriebene Verbindungsanordnung verwendbar ist. Ohne Richtelement 16 gleichen sich alle Verbinderteile im Bereich der Stirnfläche, so dass sie untereinander mit jedem anderen Verbinderteil mit je einem stets gleichartig aufgebauten Richtelement kombinierbar sind.

Es dürfte nicht erforderlich sein, weitere Besonderheiten für gleichartig aufgebaute Befestigungsstücke darzustellen, die durch Verschrauben, Verpressen oder Verrasten miteinander verbindbar sind. Auch die gemeinsame Herstellung der V-förmigen Mulde 20 eines Verbinders, beispielsweise durch Fräsen, in den Befestigungsstücken 14, 15 ist ohne besondere Darstellung als Vorteil erkennbar, weil dadurch ein am Übergang eines Verbinderteiles zum anderen Verbinderteil möglicher Versatz vermieden wird.

Die dargestellte rückwärtige Befestigung der Lichtleitfaser ist mit ähnlichem Erfolg auch bei Geräteanschlüssen anwendbar.

Schliesslich ist ohne besondere Darstellung die gezeigte Verbinderanordnung für mehrere Lichtleitfasern ausgestaltbar, bei der eine Vielzahl von parallel zueinander liegenden Rinnen und Mulden zum Ankuppeln mehrerer Lichtleitfasern in einem Halter vorgesehen ist.

## Patentansprüche

1. Einrichtung zum lösbaren Ankuppeln der freien Stirnseite mindestens einer, insbesondere zur Nachrichtenübertragung verwendeten, Lichtleitfaser, mit einem in mindestens einem Befestigungsstück gelagerten Richtelement und mit mindestens einem elastischen Element zum Ausrichten der Lichtleitfaser beim Ankuppeln an ein Gegenstück in einer im Richtelement angeordneten V-förmigen Rinne, dadurch gekennzeichnet, dass das Richtelement (16) mit der V-förmigen Rinne (17) exzentrisch und unverdrehbar im Befestigungsstück (14, 15) angeordnet ist, dass in dem an die Rinnenseite des Richtelementes (16) angrenzenden Bereich des Befestigungsstückes (14, 15) eine parallel zur V-förmigen Rinne (17) ausgerichtete Mulde (20) für die Vorjustierung der Lichtleitfaser (10, 11) ausgebildet ist, und dass im Bereich der Mulde (20) in der Stirnseite des Befestigungsstückes (14, 15) mindestens ein etwa bündig abschliessendes Druckstück (18, 19) aus gummielastischem Material im Befestigungsstück angeordnet ist.

2. Einrichtung nach Anspruch 1, dadurch gekennzeichnet, dass zwei gleichartig aufgebaute, ein Richtelement (16) gemeinsam aufnehmende und miteinander verbindbare Befestigungsstücke (14, 15) zur Verbindung zweier Lichtleitfasern (10, 11) vorgesehen sind, die durch Verschrauben, Verpressen oder Verrasten miteinander verbindbar sind.

3. Einrichtung nach Anspruch 1, dadurch gekennzeichnet, dass ein Befestigungsstück (14) und ein mit diesem ein Richtelement (16) gemeinsam aufnehmender Geräteanschluss (31) vorgesehen sind.

4. Einrichtung nach Anspruch 1, dadurch gekennzeichnet, dass die Mulde (20) auch im Druckstück (18, 19) eingeformt ist.

5. Einrichtung nach Anspruch 1, dadurch gekennzeichnet, dass das Druckstück (18, 19) in das Befestigungsstück (14, 15) eingeklebt ist.

6. Einrichtung nach Anspruch 1, dadurch gekennzeichnet, dass ein Befestigungsstück aus zwei Hälften besteht, von denen die eine eine Aussparung (26) für das Richtelement (16) und die andere die Mulde (20) umfasst.

7. Einrichtung nach Anspruch 6, dadurch gekennzeichnet, dass auf der die Aussparung (26) enthaltenden Hälfte (25) ein elastisches Klemmittel (21) angebracht ist.

8. Einrichtung nach Anspruch 7, dadurch gekennzeichnet, dass das Klemmittel (21) angespritzt ist.

9. Verfahren zur Herstellung der Einrichtung nach Anspruch 1, dadurch gekennzeichnet, dass das Befestigungsstück (14, 15) im Spritzgussverfahren hergestellt und das Druckstück (18, 19) dabei eingeformt wird.

10. Verfahren nach Anspruch 9, dadurch gekennzeichnet, dass die Mulde (20) beim Herstellen im Spritzgussverfahren mit eingeformt wird.

## Claims

1. A device for the detachable coupling of the free end face of at least one optical fibre, notably for the transmission of communications, comprising a guide element which is mounted in at least one connection piece and also comprising at least one elastic element for the alignment of the optical fibre during the coupling thereof to a counterpart in a V-groove provided in the guide element, characterized in that the guide element (16) with the V-groove (17) is eccentrically arranged in the connection piece (14, 15), so as to be locked against rotation, there being provided in the connection piece (14, 15) in the zone thereof which adjoins the grooved side of the guide element (16) a channel (20) which extends parallel to the V-groove (17) for positioning of the optical fibre (10, 11), and at least one sealing pressure piece (18, 19) of a rubber elastic material being arranged in the connection piece (14, 15) at the area of the channel (20) so as to be approximately flush with the surface of the connection piece.

2. A device as claimed in claim 1, characterized in that, for the coupling of two optical fibres (10, 11), there are provided two connection pieces (14, 15) of similar construction which accommodate a common guide element (16) and which can be interconnected by screwing, pressing or interlocking.

3. A device as claimed in claim 1, characterized in that there are provided a connection piece (14) and an apparatus connector (31) which accommodate a common guide element (16).

4. A device as claimed in claim 1, characterized in that the channel (20) is also formed in the pressure piece (18, 19).

5. A device as claimed in claim 1, characterized in that the pressure piece (18, 19) is glued into the connection piece (14, 15).

6. A device as claimed in claim 1, characterized in that a connection piece consists of two halves, one of which comprises a recess (26) for the guide element (16) whilst the other half comprises the channel (20).

7. A device as claimed in claim 6, characterized in that an elastic clamping means (21) is provided on the half (25) which comprises the recess (26).

8. A device as claimed in claim 7, characterized in that the clamping means (21) is moulded on.

9. A method of manufacturing the device claimed in claim 1, characterized in that the connection piece (14, 15) is formed by injection moulding, the pressure piece (18, 19) being formed therein.

10. A method as claimed in claim 9, characterized in that the channel (20) is also formed during the injection moulding process.

## Revendications

1. Dispositif servant à coupler de façon détachable la face terminale libre d'au moins une fibre optique utilisée notamment pour la transmission d'information, dispositif qui est muni d'un élément de positionnement logé dans au moins un organe de fixation ainsi que d'au moins un élément élastique servant, lors du couplage à un contre-organe, à aligner la fibre optique placée dans une rainure en V, caractérisé en ce que l'élément de positionnement (16) muni de la rainure en V (17) est placé excentriquement et de façon immobile dans l'organe de fixation (14, 15), en ce que, dans la partie de l'organe de fixation (14, 15) qui est contiguë au côté rainure de l'élément de positionnement (16), est pratiquée une cavité (20) parallèle à la rainure en V (17) et servant à prépositionner la fibre optique, et en ce qu'à l'endroit de la cavité (20), à la face terminale de l'organe de fixation (14, 15), celui-ci est muni d'au moins un organe de pression (18, 19), en matériau élastoplastique, affleurant pratiquement la face terminale.

2. Dispositif selon la revendication 1, caractérisé en ce qu'il comporte deux organes de fixation (14, 15) de structure similaire recevant ensemble un élément de positionnement (16) et pouvant être réunis, organes de fixation qui servent à relier deux fibres optiques (10, 11) et qui peuvent être réunis par vissage, pressage ou encliquetage.

3. Dispositif selon la revendication 1, caractérisé en ce qu'il comporte un organe de fixation (14) et un connecteur d'appareil (31) recevant, conjointement avec l'organe de fixation (14), un élément de positionnement (16).

4. Dispositif selon la revendication 1, caractérisé en ce que l'évidement (20) est également pratiqué dans l'organe de pression (18, 19).

5. Dispositif selon la revendication 1, caractérisé en ce que l'organe de pression (18, 19) est collé dans l'organe de fixation (14, 15).

6. Dispositif selon la revendication 1, caractérisé en ce qu'un organe de fixation est constitué par deux moitiés dont l'une présente un évidement (26) pour l'élément de positionnement (16) et dont l'autre présente la cavité (20).

7. Dispositif selon la revendication 6, caractérisé en ce qu'un organe de serrage élastique (21) est prévu sur la moitié 25 présentant l'évidement (26).

8. Dispositif selon la revendication 7, caractérisé en ce que l'organe de serrage (21) est formé par moulage par injection.

9. Procédé de réalisation du dispositif selon la revendication 1, caractérisé en ce que l'organe de fixation (14, 15) est réalisé suivant la méthode de moulage par injection et en ce que l'organe de pression (18, 19) est moulé simultanément avec celui-ci.

10. Procédé selon la revendication 9, caractérisé en ce que la cavité (20) est également formée lors de la réalisation suivant la méthode de moulage par injection.

Fig. 1

Fig. 2

Fig. 3